# DEMANDE DE BREVET EUROPEEN

(11) **EP 2 756 775 A1**
(43) Date de publication de la demande: **23.07.2014**
(21) Numéro de dépôt: 14151348.1
(22) Date de dépôt: 16.01.2014
(51) Int. Cl.: A45C 11/24, H04M 1/04, H04B 1/38

(54) **Coque de protection pour terminal de données portable**

(30) Priorité: 17.01.2013 FR 1350388
(71) Demandeur: Truffier-Blanc, Gerald, 38330 Saint Nazaire Les Eymes (FR); Picot, François, 74920 Combloux (FR)
(72) Inventeur: Truffier-Blanc, Gerald, 38330 Saint Nazaire Les Eymes (FR); Picot, François, 74920 Combloux (FR)
(74) Mandataire: Cabinet Laurent & Charras

(57) **Abrégé**

Selon l'invention, la coque de protection (2) pour terminal de données permet l'accès à toutes les fonctions dudit terminal sans retirer la protection. Cette coque est constituée par une feuille (1) découpée de manière à définir :
- une zone principale (4) destinée à venir en contact avec l'une des faces dudit terminal de données (3),
- des extensions (5) s'étendant depuis ladite zone principale (4) et destinées à être repliées pour envelopper ledit terminal de données (3), une partie au moins des extensions (5) comprenant des organes d'assemblage avec une ou plusieurs autres extensions (5) et/ou avec la zone principale (4) pour former, après assemblage desdites extensions (5), la coque de protection (2) proprement dite du terminal de données portable (3), et,
- des ouvertures traversantes (7) pour permettre l'accès, après enveloppage, aux parties utiles dudit terminal de données (3).

## Description

### DOMAINE TECHNIQUE

La présente invention concerne une coque de protection pour terminal de données portable. Par terminal de données portables on entend tout type de terminaux, notamment de capture de données. L'invention peut également s'adapter à d'autres types de terminaux de données tels que par exemple ceux du type PDA (de l'anglais : « *Personal Digital Assistant* »), de type Smartphone, ou similaires.

### ART ANTERIEUR

Il est bien connu de l'état de la technique d'utiliser des coques de protection pour les terminaux de données. Plusieurs conceptions apparaissent notamment sur le marché. Ces coques peuvent former un boîtier apte à recevoir l'objet à protéger, ou sont parfois constituées d'un moule en silicone. Ces coques de formes diverses et variées donnent satisfaction en termes de protection contre les chutes, chocs ou rayures, tout en permettant l'accès à toutes les fonctions du matériel sans retirer la protection. Cependant leur prix de revient est souvent trop élevé, ou leur fabrication trop longue et complexe.

### EXPOSE DE L'INVENTION

Le problème que se propose de résoudre l'invention est donc de fournir une coque de protection amovible pour terminal de données ou autres, qui donne entière satisfaction en termes de protection contre les chutes, chocs ou rayures, tout en permettant l'accès à toutes les fonctions du matériel sans retirer la protection et qui soit de conception simple, sûre et rationnelle avec un prix de revient relativement faible et une fabrication simple et rapide.

Pour résoudre les problèmes précités, il a été mis au point une coque de protection pour terminal de données portable ou autre, tout en permettant l'accès à toutes les fonctions dudit terminal sans retirer la protection, remarquable en ce qu'elle est constituée par une feuille découpée de manière à définir :
- une zone principale destinée à venir en contact avec l'une des faces dudit terminal de données,
- des extensions s'étendant depuis ladite zone principale et destinées à être repliées pour envelopper ledit terminal de données, et
- des ouvertures traversantes pour permettre l'accès, après enveloppage, aux parties utiles dudit terminal de données.

Toujours selon l'invention, une partie au moins des extensions comprend des organes d'assemblage avec une ou plusieurs autres extensions et/ou avec la zone principale pour former, après assemblage desdites extensions, la coque de protection proprement dite du terminal de données portable.

De cette manière, la coque de protection selon l'invention est de conception simple, sûre et rationnelle et son coût de revient est relativement faible. La coque selon l'invention permet d'envelopper le terminal de données portable et de le protéger de façon permanente contre les chocs, chutes ou rayures, tout en permettant à l'utilisateur dudit terminal d'avoir accès à toutes les fonctions et parties utiles de celui-ci et d'en avoir une utilisation aisée et non encombrée. Par parties utiles on entend tout ce que l'utilisateur dudit terminal nécessite de toucher ou d'avoir accès, tel que par exemple l'écran, les boutons de fonctionnement, les LED pour signaux visuels, les ports de connexions du terminal, etc.

Avantageusement, la feuille est également munie de découpes destinées à permettre la fixation, notamment amovible, d'accessoires, tels que par exemple un stylet, un rabat de protection de l'écran du terminal, une bandoulière, des pattes élastiques, etc.

Selon une forme de réalisation particulière de la coque selon l'invention, et pour améliorer les performances d'absorption des chocs et chutes, la feuille qui la constitue comporte un complexe amortissant, par exemple réalisé en une mousse, notamment à base de mousse de polyéthylène ou de polyuréthane, ou en un gel, par exemple silicone.

Avantageusement et pour faciliter le repliage des extensions, afin d'envelopper le terminal de données portable à protéger, celles-ci comprennent sur leur face externe ou sur leur face interne une découpe mi-chair. Par découpe mi-chair on entend une découpe d'une partie de l'épaisseur de la feuille.

De préférence et toujours pour offrir une plus grande protection du terminal de données, une couche de matériau rigide est collée sur le complexe amortissant, notamment du polypropylène ou du polyéthylène, voire du PVC, du carton ou encore une feuille d'aluminium et se présente à l'extérieur ou à l'intérieur de la coque, lorsque celle-ci vient envelopper le terminal.

Selon des formes de réalisation différentes, dans la coque de protection selon l'invention, les organes d'assemblage peuvent être constitués par des rivets, des bandes auto-agrippantes complémentaires du type de celles mieux connues sous la marque déposée « Velcro® » par exemple, par des boutons-pression, par des aimants, par des fermoirs, des vis, des fermetures à glissière, voire par tout autre moyen de fixation, qu'ils soient de nature mécanique, chimique (colle), ou encore par soudure ou thermo soudure. Quel que soit le type d'organe d'assemblage mis en oeuvre, on conserve le caractère amovible de la coque de protection par rapport au terminal qu'elle est destinée à protéger.

L'invention vise également un procédé de fabrication de ladite coque de protection qui soit simple et économique.

Selon l'invention, ce procédé est remarquable en ce qu'il comprend les étapes, simultanées ou consécutives, consistant à réaliser à partir d'une feuille :
- la découpe d'un patron définissant une zone principale destinée à venir en contact avec l'une des faces dudit terminal de données, et des extensions s'étendant depuis ladite zone principale et destinées à être repliées pour envelopper ledit terminal de données,
- la découpe d'ouvertures traversantes permettant l'accès, après enveloppage, aux parties utiles dudit terminal de données,
- les découpes mi-chair aux niveaux où les extensions dudit patron doivent être repliées pour envelopper ledit terminal de données.

Avantageusement, ce procédé comporte également la découpe de zones destinées à permettre la fixation, notamment de manière amovible, d'éléments annexes, d'ergonomie, ou d'accessoires, tels que par exemple un stylet, un rabat de protection de l'écran du terminal, une bandoulière, des pattes élastiques, etc.

### BREVE DESCRIPTION DES DESSINS

D'autres caractéristiques et avantages de l'invention ressortiront clairement de la description qui en est faite ci-après, à titre indicatif et nullement limitatif, en référence aux figures annexées, dans lesquelles :
- la figure 1 est une représentation schématique de la feuille découpée destinée à former la coque de protection pour terminal de données portable selon l'invention, ladite feuille étant représentée à plat et vue de face ;
- la figure 2 est une représentation schématique illustrant la feuille dans une position intermédiaire de repliage ;

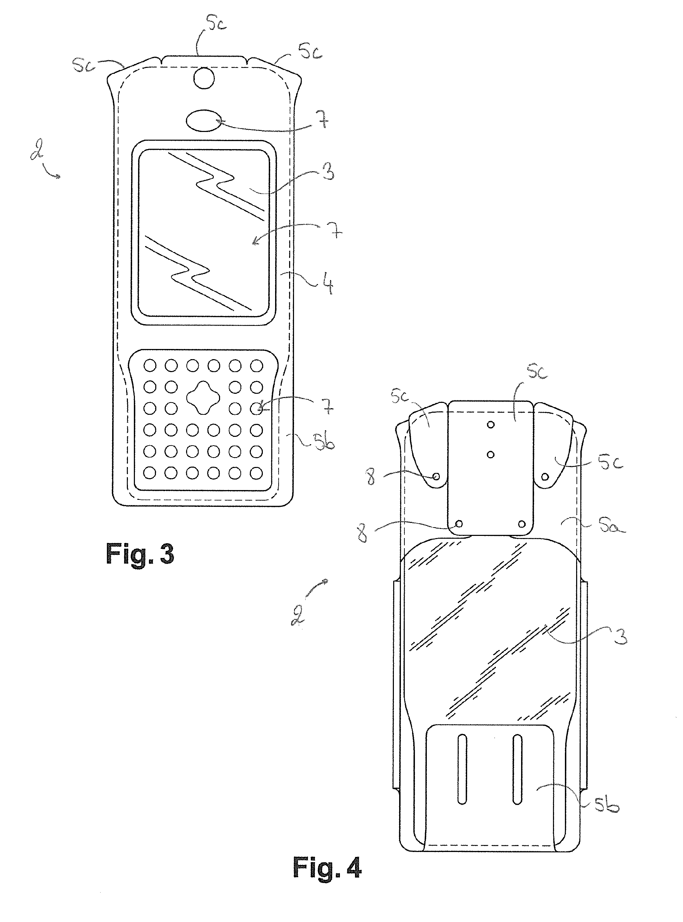

- la figure 3 est une représentation schématique illustrant la coque de protection selon l'invention vu de face et enveloppant un terminal de données portable ;
- la figure 4 est une représentation schématique illustrant la coque de protection selon l'invention vu de derrière et enveloppant un terminal de données portable.

### EXPOSE DETAILLE DE L'INVENTION

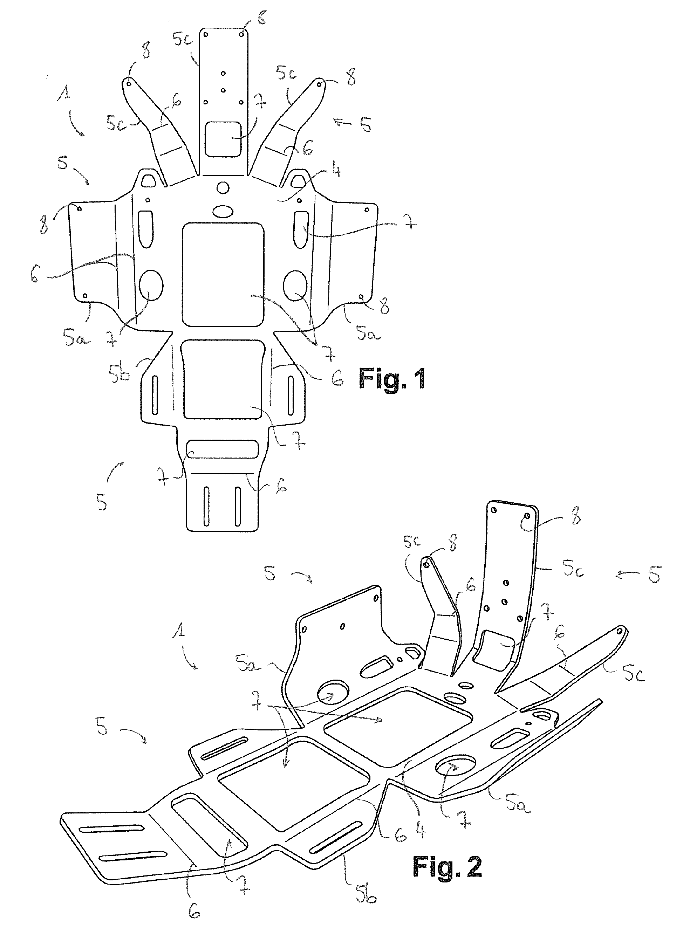

En référence à la figure 1 illustrant de manière schématique la feuille découpée (1) destinée à former la coque de protection (2) pour terminal de données portable (3) selon l'invention, celle-ci est réalisée en une mousse de polyuréthane par exemple.

Cette feuille (1) comprend d'un premier côté une couche de polypropylène par exemple collée sur toute sa surface. Cette couche, plus rigide que la mousse de polyuréthane, constitue la paroi dite externe de la feuille (1). De l'autre côté, une toile de textile tissé est collée sur toute la surface de la feuille afin de protéger la mousse de polyuréthane. Cette toile constitue la paroi dite interne de la feuille (1).

La feuille (1) est découpée pour former un patron apte à envelopper le terminal de données portable (3) à protéger. Les dimensions de celle-ci sont donc fonction des dimensions du matériel à protéger. La découpe du patron définit une zone principale (4) et des extensions (5).

Dans une forme de réalisation non limitative du patron représenté sur la figure 1, la zone principale (4) est de forme sensiblement rectangulaire.

Les extensions (5) s'étendent depuis ladite zone principale (4), de chaque côté de celle-ci et sont destinées à être repliées pour envelopper ledit terminal de données (3). De cette manière sont définies, deux extensions latérales (5a), une extension inférieure (5b) et trois extensions supérieures (5c)

Chacune des extensions (5a, 5b, 5c), comprend sur sa face interne, des découpes à mi-chair (6) au niveau où elle doit être repliée pour envelopper ledit terminal de données (3). Ces découpes à mi-chair (6) peuvent consister par exemple en une découpe uniquement de la couche en matériau amortissant sans altérer la couche rigide de la feuille (1).

Des ouvertures traversantes (7) sont découpées dans la feuille (1) afin de permettre l'accès, après enveloppage, aux parties utiles du terminal de données (3).

Toutes ces opérations de découpe peuvent être réalisées simultanément à l'aide d'une presse et de poinçons ou bien consécutivement. Une découpe laser peut également être mise en oeuvre, ainsi que les procédés de découpe bien connus de l'homme du métier.

Des orifices traversants (8) sont ménagés aux extrémités des extensions pour le passage de d'organes d'assemblage (non représentés) permettant de fixer une extension (5) à une autre extension (5) ou bien à la zone principale (4) pour envelopper le terminal de données (3) et former la coque de protection (2) proprement dite. Ces organes d'assemblage peuvent être de toute nature, et par exemple des boutons - pression, des bandes auto-agrippantes, des pattes élastiques, des aimants, des fermoirs, etc.

Pour l'utilisation de la coque (2) selon l'invention, la zone principale (4) du patron est destinée à venir en contact avec la face principale dudit terminal de données (3). Ensuite, les extensions (5) sont repliées ou rabattues derrière le terminal de données (3) afin de l'envelopper. Lesdites extensions (5) sont fixées entre elles à l'arrière du terminal (3) aux moyens desdits organes d'assemblage.

La feuille (1) comporte également des découpes (9), destinées à permettre la fixation réversible d'accessoires, d'éléments d'ergonomie, voire de customisation, en l'espèce d'une bandoulière (non représentée).

Elle comporte également des découpes (10) et (11), en l'espèce destinées à recevoir une patte élastique, permettant dans le cas présent, de permettre l'ouverture ou la fermeture d'un rabat (12) ou capot permettant l'ouverture de la partie inférieure de la coque de protection, sans altérer cette dernière et sans nécessiter le retrait du terminal hors de la coque, par exemple, afin de faciliter l'accès à des ports ou autre.

Parmi les éléments de customisation, susceptibles d'être annexés à la coque de l'invention, on peut prévoir un rabat de protection de l'écran (non représenté), dont est susceptible d'être muni le terminal. Ce rabat de protection peut couvrir toute la surface dudit écran, mais peut également être limité au négatif de l'ouverture traversante (7) destinée à se positionner à son aplomb lorsque la coque de protection est montée sur le terminal.

On obtient de cette manière une coque (2), amovible, qui donne entière satisfaction que ce soit en termes de coût de revient qu'en termes de protection contre les chocs, rayures ou autres contraintes.

Le terminal de données (3) est ainsi bien protégé et la fabrication d'une telle coque (2) est alors simple et rapide et les coûts inhérents en sont largement réduits.

En outre, le positionnement d'une telle coque autour d'un terminal s'avère également d'une grande simplicité et d'une grande praticité.

## Revendications

1. Coque de protection (2) pour terminal de données portable (3) permettant l'accès à toutes les fonctions dudit terminal sans retirer la protection, ***caractérisée* en ce qu'**elle est constituée par une feuille (1) découpée de manière à définir :
- une zone principale (4) destinée à venir en contact avec l'une des faces dudit terminal de données (3),
- des extensions (5) s'étendant depuis ladite zone principale (4) et destinées à être repliées pour envelopper ledit terminal de données (3), une partie au moins des extensions (5) comprenant des organes d'assemblage avec une ou plusieurs autres extensions (5) et/ou avec la zone principale (4) afin de former, après assemblage desdites extensions (5), la coque de protection (2) proprement dite du terminal de données portable (3), et,
- des ouvertures traversantes (7) pour permettre l'accès, après enveloppage, aux parties utiles dudit terminal de données (3).

2. Coque de protection (2) selon la revendication 1, ***caractérisée* en ce que** la feuille (1) est également munie de découpes (9, 10, 11) destinées à permettre la fixation, notamment amovible, d'accessoires d'ergonomie et/ou de customisation.

3. Coque de protection (2) selon l'une des revendications 1 et 2, ***caractérisée* en ce que** la feuille comporte un complexe amortissant, notamment comprenant une mousse ou un gel.

4. Coque de protection (2) selon la revendication 3, ***caractérisée* en ce que** la mousse est une mousse de polyéthylène ou une mousse de polyuréthane.

5. Coque de protection (2) selon la revendication 3, ***caractérisée* en ce que** le gel est un gel de silicone.

6. Coque de protection (2) selon l'une des revendications 1 à 5, ***caractérisée* en ce que** les extensions (5) comprennent sur leur face externe ou interne au moins une découpe à mi-chair (6) afin de faciliter leur repliage.

7. Coque de protection (2) selon l'une des revendications 3 à 6, ***caractérisée* en ce qu'**une couche de matériau rigide est collée sur le complexe amortissant, notamment réalisé à base de polypropylène ou de polyéthylène.

8. Coque de protection (2) selon l'une des revendications 1 à 5, ***caractérisée* en ce que** les organes d'assemblage sont choisis dans le groupe comprenant les rivets, les bandes auto-agrippantes complémentaires, les boutons - pression, les aimants, les fermoirs, les fermetures à glissière, les vis, les pattes élastiques, la colle.

9. Procédé de fabrication de la coque de protection (2) pour terminal de données (3) selon l'une des revendications 1 à 8, ***caractérisé* en ce qu'**il comprend les étapes, simultanées ou consécutives, consistant à réaliser à partir d'une feuille (1) :
- la découpe d'un patron définissant une zone principale (4) destinée à venir en contact avec l'une des faces dudit terminal de données (3), et des extensions (5) s'étendant depuis ladite zone principale (4) et destinées à être repliées pour envelopper ledit terminal de données (3),
- la découpe d'ouvertures traversantes (7) permettant l'accès, après enveloppage, aux parties utiles dudit terminal de données (3),
- les découpes à mi-chair (6) aux niveaux où les extensions (5) dudit patron doivent être repliées pour envelopper ledit terminal de données (3).

10. Procédé de fabrication de la coque de protection (2) pour terminal de données (3) selon la revendication 9, **caractérisé en ce qu'**il est également réalisé simultanément ou consécutivement la découpe d'ouvertures traversantes (9, 10, 11) destinées à permettre la fixation, notamment amovible, d'accessoires d'ergonomie et/ou de customisation.
